# EUROPEAN PATENT APPLICATION

(11) **EP 4 557 538 A1**
(43) Date of publication of application: **21.05.2025**
(21) Application number: 23210569.2
(22) Date of filing: 17.11.2023
(51) Int. Cl.: H02B 1/56, H05K 7/20

(54) **SWITCHGEAR**

(71) Applicant: ABB SCHWEIZ AG, 5400 Baden (CH)
(72) Inventor: KOPP, Dalibor, 613 00 Brno (CZ); NOVAK, Ondrej, 691 06 Velké Pavlovice (CZ); RUMLER, David, 664 51 Kobylnice (CZ); KUNICKY, Ondrej, 696 81 Bzenec (CZ); BAJANEK, Tomas, 684 01 Slavkov u Brna (CZ)
(74) Representative: Maiwald GmbH

(57) **Abstract**

The present invention relates to a busbar compartment (10) for a low voltage, medium voltage or high voltage switchgear, the busbar compartment comprising:
- a first opening (30) in a first wall of the busbar compartment; and
- a second opening (70) in a second wall of the busbar compartment;
wherein a plurality of busbars (20) each have a horizontal section located within the busbar compartment;
wherein the plurality of horizontal sections of the plurality of busbars are located adjacent to one another;
wherein the first opening is located at a vertical position below the plurality of horizontal sections of the plurality of busbars;
wherein the first opening is located at a lateral position to a first side of the plurality of horizontal sections of the plurality of busbars;
wherein the second opening is located at a vertical position above the plurality of horizontal sections of the plurality of busbars;
wherein the second opening is located at a lateral position to a second side of the plurality of horizontal sections of the plurality of busbars, and wherein the second side is opposite to the first side; and
wherein the busbar compartment is configured for air (A) to enter the first opening and at least a first portion (8) of the air that entered the first opening to exit the second opening.

## Description

### FIELD OF THE INVENTION

The present invention relates to improved cooling of busbars in a low voltage, medium voltage or high voltage switchgear.

### BACKGROUND OF THE INVENTION

In the low, medium and high voltage applications, busbars that carry current heat up due to the passage of the electrical current via Joule heating.

These hot components must be cooled.

A significant percentage of the cooling is sought to be achieved by air flowing over a surface of a hot component. Therefore, the ability to cool component is directly dependent upon the quantity and quality of the air flowing around the components.

Natural convection is presently used to cool busbars, to dissipate heat to ambient, and this is also the case where heatsinks are used on the top of the busbars.

However, busbars are not ideally positioned or designed to allow air to flow around the busbars, and heatsinks when present, to efficiently remove heat to ambient.

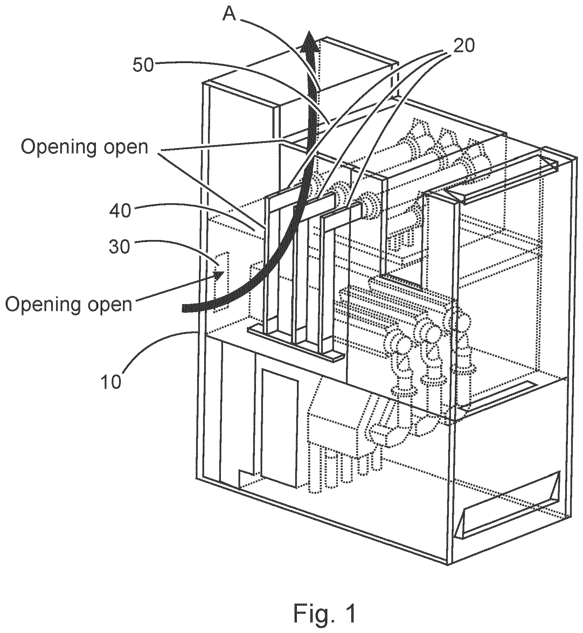

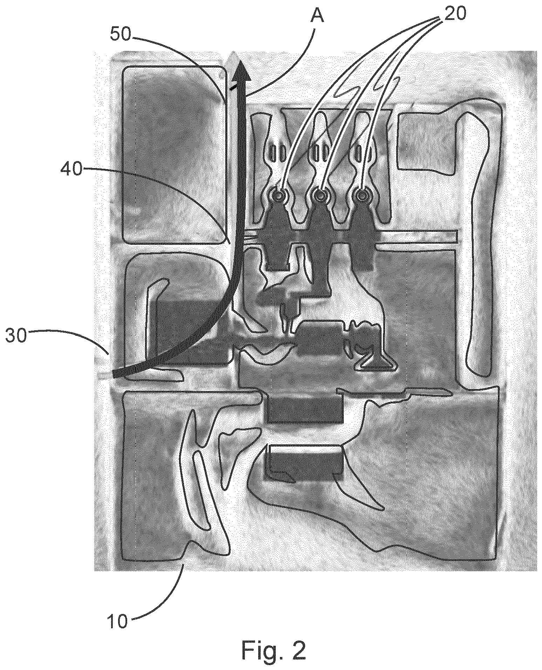

Fig. 1 shows a known busbar compartment 10, with Fig. 2 showing the air flow within the busbar compartment.

In the known busbar compartment 10, there are three busbars that have horizontal sections 20. Each busbar can for example be associated with one phase of a three phase system. An opening 30 on a side wall to one side of the busbars lets cold air enter the busbar compartment. An internal opening 40 permits the cold air to rise on the same side of the busbar compartment. An opening 50 in the top wall of the busbar compartment lets air exit the busbar compartment.

However, the air that has entered the busbar compartment has not interacted with the busbars to cool the busbars or interacted with hot parts of the busbar compartment to cool the busbar compartment.

Thus, the busbars and the busbar compartment as a whole is not cooled efficiently or effectively.

There is a need to address these problems.

### SUMMARY OF THE INVENTION

Therefore, it would be advantageous to have an improved ability to cool busbars in a busbar compartment and the busbar compartment as a whole.

The object of the present invention is solved with the subject matter of the independent claims, wherein further embodiments are incorporated in the dependent claims.

In a first aspect, there is provided a busbar compartment for a low voltage, medium voltage or high voltage switchgear. The busbar compartment comprises:
- a first opening in a first wall of the busbar compartment; and
- a second opening in a second wall of the busbar compartment.

A plurality of busbars each have a horizontal section located within the busbar compartment. The plurality of horizontal sections of the plurality of busbars are located adjacent to one another. The first opening is located at a vertical position below the plurality of horizontal sections of the plurality of busbars. The first opening is located at a lateral position to a first side of the plurality of horizontal sections of the plurality of busbars. The second opening is located at a vertical position above the plurality of horizontal sections of the plurality of busbars. The second opening is located at a lateral position to a second side of the plurality of horizontal sections of the plurality of busbars, and the second side is opposite to the first side. The busbar compartment is configured for air to enter the first opening and at least a first portion of the air that entered the first opening to exit the second opening.

In this way, the cold air entering the busbar compartment is forced to interact with the hot busbars to a greater extent and in doing so improve cooling of the busbars and of the whole busbar compartment because the heated air leaves the compartment.

In other words, a chimney like effect is utilized to aid air cooling of the busbars. Air interacts with the horizontal sections of the busbars, which are hot, and the air is heated and rises. This heated air then exits the busbar compartment via the second opening that is above the horizontal sections of the busbars. The hot air movement towards and out of the second opening leads to cold air being drawn into the busbar compartment and this air interacts with the horizontal sections of the busbars, is heated, rises and leaves via the second opening. Thus, a self-sustaining natural convective air cooling system is provided.

In an example, the plurality of horizontal sections of the plurality of busbars are orientated parallel to one another.

In an example, there are three busbars.

In an example, the plurality of horizontal sections of the plurality of busbars are each at the same vertical position - in other words at the same height.

In an example, the first side of the plurality of horizontal sections of the plurality of busbars is configured to direct the air that enters the first opening to flow at least partially vertically on the first side of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the busbar compartment is configured to direct the air that enters the first opening to flow at least partially horizontally above and/or around the top regions of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the busbar compartment is configured to direct the air that enters the first opening to flow at least partially horizontally below and/or around the bottom regions of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the second side of the plurality of horizontal sections of the plurality of busbars is configured to direct the air that enters the first opening to flow at least partially vertically on the second side of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening that has been heated by the busbars can be effectively and efficiently directed to the second opening to leave the busbar compartment.

In an example, the first wall is a side wall of the busbar compartment.

In an example, the second wall is a top wall of the busbar compartment.

In an example, the busbar compartment is configured for at least a part of the at least first portion of the air that entered the first opening to flow over the plurality of horizontal sections of the plurality of busbars before exiting the second opening.

In an example, the busbar compartment is configured for the at least a part of the at least first portion of the air that entered the first opening to flow over a region at the top of the plurality of horizontal sections of the plurality of busbars before exiting the second opening.

In an example, the busbar compartment comprises a duct at the top of the busbar compartment, the duct comprising a top wall of the busbar compartment. The busbar compartment is configured such that the air flow over the plurality of horizontal sections of the plurality of busbars is at least partially within the duct.

In this way, the top wall of the busbar compartment is cooled leading to an overall cooling of the busbar compartment.

In an example, each of the plurality of horizontal sections of the plurality of busbars has a heat sink thermally connected to it. The busbar compartment is configured for at least a part of the at least the first portion of the air that entered the first opening to interact with the plurality of heat sinks of the plurality of horizontal sections of the plurality of busbars before exiting the second opening.

In this way, heat sinks attached to the busbars are effectively cooled. Thus, the busbars are cooled and the busbar compartment is also better cooled.

In an example, a heat sink is thermally connected to a top wall of the busbar compartment. The busbar compartment comprises a duct at the top of the busbar compartment, the duct comprising a top wall of the busbar compartment. The busbar compartment is configured for at least a part of the at least first portion of the air that entered the first opening to flow over the plurality of horizontal sections of the plurality of busbars within the duct before exiting the second opening.

In this way, a heat sink attached the top of the busbar compartment and the top wall of the busbar compartment itself can be better cooled. Thus, the busbar compartment is better cooled as are the busbars.

In an example, the busbar compartment is configured for at least a part of the at least first portion of the air that entered the first opening to flow horizontally over the plurality of horizontal sections of the plurality of busbars before exiting the second opening.

Alternatively or additionally, in an example, the busbar compartment is configured for at least a part of the at least first portion of the air that entered the first opening to flow horizontally around a region at the top of the plurality of horizontal sections of the plurality of busbars before exiting the second opening.

Alternatively or additionally, in an example, the busbar compartment is configured for at least a part of the at least first portion of the air that entered the first opening to flow vertically over the plurality of horizontal sections of the plurality of busbars before exiting the second opening.

In an example, the busbar compartment is configured for the air to enter the first opening and for the at least first portion of the air that entered the first opening to flow vertically and then flow horizontally before exiting the second opening.

In an example, the busbar compartment comprising an air guide vane. The air guide vane is located at a lateral position to the first side of the plurality of horizontal sections of the plurality of busbars and located above the plurality of horizontal sections of the plurality of busbars. The air guide vane is configured to change a flow direction of air by 90 degrees.

In an example, the busbar compartment comprising a third opening in a third wall of the busbar compartment. The third opening is located at a vertical position below the plurality of horizontal sections of the plurality of busbars. The vertical position of the third opening is above the vertical position of the first opening. The third opening is located at a lateral position to the second side of the plurality of horizontal sections of the plurality of busbars. The busbar compartment is configured for the air to enter the first opening and at least a second portion of the air that entered the first opening to exit the third opening.

In this way, cold air entering the busbar compartment flows over the busbars including flowing horizontally over the top of the busbars but also flows over the bottom region of the busbars, thereby increasing the cooling performance.

In an example, the second side of the plurality of horizontal sections of the plurality of busbars is configured to direct the air that enters the first opening to flow towards the third opening. This can be via appropriate location of existing components of the busbar compartment to form a duct to direct the air and/or the utilization of one or more additional sheet or vanes to form a duct to direct the air. Thus, the cold air that enters the busbar compartment via the first opening that has been heated by the busbars can be effectively and efficiently directed to the third opening to leave the busbar compartment.

In an example, the third wall is a side wall of the busbar compartment.

In an example, the third wall is opposite to the first wall.

In an example, the busbar compartment is configured for at least a part of the at least second portion of the air that entered the first opening to flow below and/or at a region at the bottom of the plurality of horizontal sections of the plurality of busbars before exiting the third opening.

In an example, the busbar compartment is configured for the air to enter the first opening and for the at least second portion of the air that entered the first opening to flow vertically and then flow horizontally before exiting the third opening.

In a second aspect, there is provided a busbar compartment for a low voltage, medium voltage or high voltage switchgear. The busbar compartment comprises:
- a first opening in a first wall of the busbar compartment; and
- a second opening in a second wall of the busbar compartment.

A plurality of busbars each have a horizontal section located within the busbar compartment. The plurality of horizontal sections of the plurality of busbars are located adjacent to one another. The first opening is located at a vertical position below the plurality of horizontal sections of the plurality of busbars. The first opening is located at a lateral position to a first side of the plurality of horizontal sections of the plurality of busbars. The second opening is located at a vertical position below the plurality of horizontal sections of the plurality of busbars. The second opening is located at a lateral position to a second side of the plurality of horizontal sections of the plurality of busbars, and the second side is opposite to the first side. The busbar compartment is configured for air (A) to enter the first opening and at least a first portion (C) of the air that entered the first opening to exit the second opening.

In an example, the plurality of horizontal sections of the plurality of busbars are orientated parallel to one another.

In an example, the first wall is a side wall of the busbar compartment.

In an example, the second wall is a side wall of the busbar compartment.

In an example, the second wall is opposite to the first wall.

In an example, the busbar compartment is configured for at least a part of the at least first portion of the air that entered the first opening to flow below and/or at a region at the bottom of the plurality of horizontal sections of the plurality of busbars before exiting the second opening.

In an example, the busbar compartment is configured for the air to enter the first opening and for the at least first portion of the air that entered the first opening to flow vertically and then flow horizontally before exiting the second opening.

In an example, the busbar compartment comprising a third opening in a third wall of the busbar compartment. The second opening is located at a vertical position above the plurality of horizontal sections of the plurality of busbars. The third opening is located at a lateral position to the second side of the plurality of horizontal sections of the plurality of busbars. The busbar compartment is configured for the air to enter the first opening and at least a second portion of the air that entered the first opening to exit the third opening.

In an example, the third wall is a top wall of the busbar compartment.

In an example, the busbar compartment is configured for at least a part of the at least second portion of the air that entered the first opening to flow over the plurality of horizontal sections of the plurality of busbars before exiting the third opening.

In an example, each of the plurality of horizontal sections of the plurality of busbars has a heat sink thermally connected to it. The busbar compartment is configured for at least a part of the at least the second portion of the air that entered the first opening to interact with the plurality of heat sinks of the plurality of horizontal sections of the plurality of busbars before exiting the third opening.

In an example, a heat sink is thermally connected to a top wall of the busbar compartment. The busbar compartment comprises a duct at the top of the busbar compartment, the duct comprising a top wall of the busbar compartment. The busbar compartment is configured for at least a part of the at least first portion of the air that entered the first opening to flow over the plurality of horizontal sections of the plurality of busbars within the duct before exiting the third opening.

In an example, the busbar compartment is configured for at least a part of the at least second portion of the air that entered the first opening to flow horizontally over the plurality of horizontal sections of the plurality of busbars before exiting the third opening; and/or the busbar compartment is configured for at least a part of the at least second portion of the air that entered the first opening to flow vertically over the plurality of horizontal sections of the plurality of busbars before exiting the third opening.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a known busbar compartment;
Fig. 2 shows the air flow within the busbar compartment of Fig. 1, where the velocity and direction of air flow is represented;
Fig. 3 shows an example of a new busbar compartment; and
Fig. 4 shows the air flow within the new busbar compartment of Fig. 3, where the velocity and direction of air flow is represented.

### DETAILED DESCRIPTION OF EMBODIMENTS

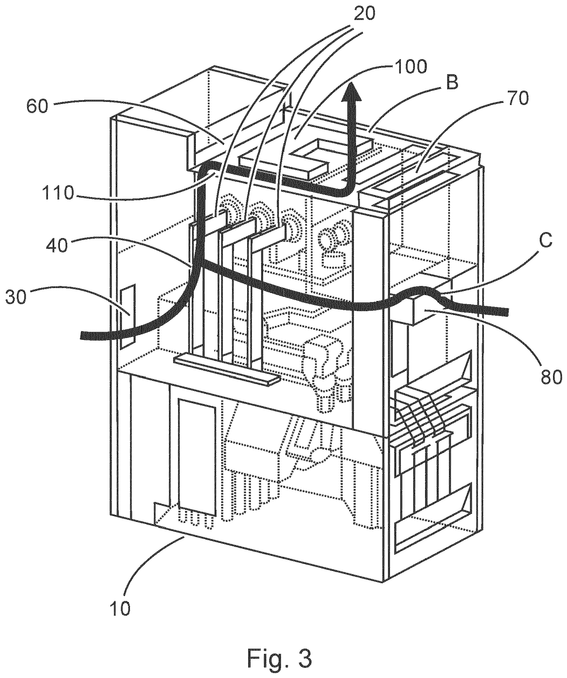

Figs. 3-4 relates to a new busbar compartments.

It is to be noted that the new busbar compartment 10 has a first opening 30 that lets cold air from outside the busbar compartment into the busbar compartment. The busbar compartment also has a second opening that lets air that has been heated out of the busbar compartment. In a detailed embodiment described below the second opening is 70 shown at the top of the busbar compartment, and for this embodiment there can then also be, but need not be, a third opening that also lets heated air out and this third opening is 80 shown on the side of the busbar compartment. However, in another detailed embodiment the second opening is opening 80 and an optional third opening is opening 70.

Regarding these two embodiments and their possible arrangements:
In the first embodiment, there is provided a busbar compartment 10 for a low voltage, medium voltage or high voltage switchgear. The busbar compartment comprises:
- a first opening 30 in a first wall of the busbar compartment; and
- a second opening 70 in a second wall of the busbar compartment.
A plurality of busbars 20 each have a horizontal section located within the busbar compartment. The plurality of horizontal sections of the plurality of busbars are located adjacent to one another. The first opening is located at a vertical position below the plurality of horizontal sections of the plurality of busbars. The first opening is located at a lateral position to a first side of the plurality of horizontal sections of the plurality of busbars. The second opening is located at a vertical position above the plurality of horizontal sections of the plurality of busbars. The second opening is located at a lateral position to a second side of the plurality of horizontal sections of the plurality of busbars, and the second side is opposite to the first side. The busbar compartment is configured for air (A) to enter the first opening and at least a first portion (B) of the air that entered the first opening to exit the second opening.

In this way, the cold air entering the busbar compartment is forced to interact with the hot busbars to a greater extent and in doing so improve cooling of the busbars and of the whole busbar compartment because the heated air leaves the compartment.

In other words, a chimney like effect is utilized to aid air cooling of the busbars. Air interacts with the horizontal sections of the busbars, which are hot, and the air is heated and rises. This heated air then exits the busbar compartment via the second opening that is above the horizontal sections of the busbars. The hot air movement towards and out of the second opening leads to cold air being drawn into the busbar compartment and this air interacts with the horizontal sections of the busbars, is heated, rises and leaves via the second opening. Thus, a self-sustaining natural convective air cooling system is provided.

In an example, the plurality of horizontal sections of the plurality of busbars are orientated parallel to one another.

In an example, there are three busbars.

In an example, the plurality of horizontal sections of the plurality of busbars are each at the same vertical position - in other words at the same height.

In an example, the first side of the plurality of horizontal sections of the plurality of busbars is configured to direct the air that enters the first opening to flow at least partially vertically on the first side of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the busbar compartment is configured to direct the air that enters the first opening to flow at least partially horizontally above and/or around the top regions of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the busbar compartment is configured to direct the air that enters the first opening to flow at least partially horizontally below and/or around the bottom regions of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening can be effectively and efficiently directed to the busbars to cool the busbars.

In an example, the second side of the plurality of horizontal sections of the plurality of busbars is configured to direct the air that enters the first opening to flow at least partially vertically on the second side of the plurality of horizontal sections of the plurality of busbars. This can be via appropriate location of existing components of the busbar compartment to form a duct to direct the air and/or the utilization of one or more additional sheet or vanes to form a duct to direct the air. Thus, the cold air that enters the busbar compartment via the first opening that has been heated by the busbars can be effectively and efficiently directed to the second opening to leave the busbar compartment.

In an example, the first wall is a side wall of the busbar compartment.

In an example, the second wall is a top wall of the busbar compartment.

In an example, the busbar compartment is configured for at least a part of the at least first portion (B) of the air that entered the first opening to flow over the plurality of horizontal sections of the plurality of busbars before exiting the second opening.

In an example, the busbar compartment is configured for the at least a part of the at least first portion (B) of the air that entered the first opening to flow over a region at the top of the plurality of horizontal sections of the plurality of busbars before exiting the second opening.

In an example, the busbar compartment comprises a duct at the top of the busbar compartment, the duct comprising a top wall of the busbar compartment. The busbar compartment is configured such that the air flow over the plurality of horizontal sections of the plurality of busbars is at least partially within the duct.

In this way, the top wall of the busbar compartment is cooled leading to an overall cooling of the busbar compartment.

In an example, each of the plurality of horizontal sections of the plurality of busbars has a heat sink 90 thermally connected to it. The busbar compartment is configured for at least a part of the at least the first portion (B) of the air that entered the first opening to interact with the plurality of heat sinks of the plurality of horizontal sections of the plurality of busbars before exiting the second opening.

In this way, heat sinks attached to the busbars are effectively cooled. Thus, the busbars are cooled and the busbar compartment is also better cooled.

In an example, a heat sink 100 is thermally connected to a top wall of the busbar compartment. The busbar compartment comprises a duct 110 at the top of the busbar compartment, the duct comprising a top wall of the busbar compartment. The busbar compartment is configured for at least a part of the at least first portion (B) of the air that entered the first opening to flow over the plurality of horizontal sections of the plurality of busbars within the duct before exiting the second opening.

In this way, a heat sink attached the top of the busbar compartment and the top wall of the busbar compartment itself can be better cooled. Thus, the busbar compartment is better cooled as are the busbars.

In an example, the busbar compartment is configured for at least a part of the at least first portion (B) of the air that entered the first opening to flow horizontally over the plurality of horizontal sections of the plurality of busbars before exiting the second opening.

Alternatively or additionally, in an example, the busbar compartment is configured for at least a part of the at least first portion (B) of the air that entered the first opening to flow horizontally around a region at the top of the plurality of horizontal sections of the plurality of busbars before exiting the second opening.

Alternatively or additionally, in an example, the busbar compartment is configured for at least a part of the at least first portion (B) of the air that entered the first opening to flow vertically over the plurality of horizontal sections of the plurality of busbars before exiting the second opening.

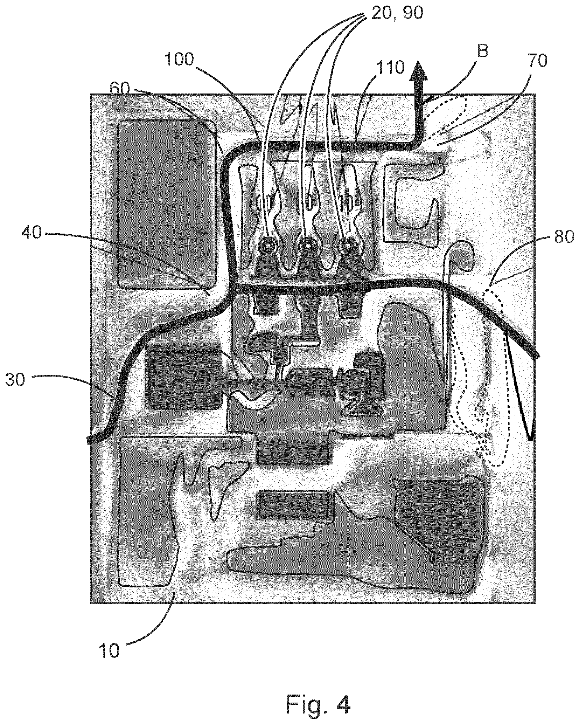

This is observed in Fig. 4 in comparison with Fig. 2, where in the new design the arrow of air flow (B) shows air flowing horizontally over the horizontal busbars, however in the new design there is also an increased air flow passing vertically around each of the three busbars.

In an example, the busbar compartment is configured for the air (A) to enter the first opening and for the at least first portion (B) of the air that entered the first opening to flow vertically and then flow horizontally before exiting the second opening.

In an example, the busbar compartment comprising an air guide vane 60. The air guide vane is located at a lateral position to the first side of the plurality of horizontal sections of the plurality of busbars and located above the plurality of horizontal sections of the plurality of busbars. The air guide vane is configured to change a flow direction of air by 90 degrees.

In an example, the busbar compartment comprising a third opening 80 in a third wall of the busbar compartment. The third opening is located at a vertical position below the plurality of horizontal sections of the plurality of busbars. The vertical position of the third opening is above the vertical position of the first opening. The third opening is located at a lateral position to the second side of the plurality of horizontal sections of the plurality of busbars. The busbar compartment is configured for the air (A) to enter the first opening and at least a second portion (C) of the air that entered the first opening to exit the third opening.

In this way, cold air entering the busbar compartment flows over the busbars including flowing horizontally over the top of the busbars but also flows over the bottom region of the busbars, thereby increasing the cooling performance.

In an example, the second side of the plurality of horizontal sections of the plurality of busbars is configured to direct the air that enters the first opening to flow towards the third opening. This can be via appropriate location of existing components of the busbar compartment to form a duct to direct the air and/or the utilization of one or more additional sheet or vanes to form a duct to direct the air. Thus, the cold air that enters the busbar compartment via the first opening that has been heated by the busbars can be effectively and efficiently directed to the third opening to leave the busbar compartment.

In an example, the third wall is a side wall of the busbar compartment.

In an example, the third wall is opposite to the first wall.

In an example, the busbar compartment is configured for at least a part of the at least second portion (C) of the air that entered the first opening to flow below and/or at a region at the bottom of the plurality of horizontal sections of the plurality of busbars before exiting the third opening.

In an example, the busbar compartment is configured for the air (A) to enter the first opening and for the at least second portion (C) of the air that entered the first opening to flow vertically and then flow horizontally before exiting the third opening.

In the second embodiment, there is provided a busbar compartment 10 for a low voltage, medium voltage or high voltage switchgear. The busbar compartment comprises:
- a first opening 30 in a first wall of the busbar compartment; and
- a second opening 80 in a second wall of the busbar compartment.
A plurality of busbars 20 each have a horizontal section located within the busbar compartment. The plurality of horizontal sections of the plurality of busbars are located adjacent to one another. The first opening is located at a vertical position below the plurality of horizontal sections of the plurality of busbars. The first opening is located at a lateral position to a first side of the plurality of horizontal sections of the plurality of busbars. The second opening is located at a vertical position below the plurality of horizontal sections of the plurality of busbars. The second opening is located at a lateral position to a second side of the plurality of horizontal sections of the plurality of busbars, and the second side is opposite to the first side. The busbar compartment is configured for air (A) to enter the first opening and at least a first portion (C) of the air that entered the first opening to exit the second opening.

In an example, the plurality of horizontal sections of the plurality of busbars are orientated parallel to one another.

In an example, the first wall is a side wall of the busbar compartment.

In an example, the second wall is a side wall of the busbar compartment.

In an example, the second wall is opposite to the first wall.

In an example, the busbar compartment is configured for at least a part of the at least first portion (C) of the air that entered the first opening to flow below and/or at a region at the bottom of the plurality of horizontal sections of the plurality of busbars before exiting the second opening.

In an example, the busbar compartment is configured for the air (A) to enter the first opening and for the at least first portion (C) of the air that entered the first opening to flow vertically and then flow horizontally before exiting the second opening.

In an example, the busbar compartment comprising a third opening 70 in a third wall of the busbar compartment. The second opening is located at a vertical position above the plurality of horizontal sections of the plurality of busbars. The third opening is located at a lateral position to the second side of the plurality of horizontal sections of the plurality of busbars. The busbar compartment is configured for the air (A) to enter the first opening and at least a second portion (B) of the air that entered the first opening to exit the third opening.

In an example, the third wall is a top wall of the busbar compartment.

In an example, the busbar compartment is configured for at least a part of the at least second portion (B) of the air that entered the first opening to flow over the plurality of horizontal sections of the plurality of busbars before exiting the third opening.

In an example, each of the plurality of horizontal sections of the plurality of busbars has a heat sink 90 thermally connected to it. The busbar compartment is configured for at least a part of the at least the second portion (B) of the air that entered the first opening to interact with the plurality of heat sinks of the plurality of horizontal sections of the plurality of busbars before exiting the third opening.

In an example, a heat sink 100 is thermally connected to a top wall of the busbar compartment. The busbar compartment comprises a duct 110 at the top of the busbar compartment, the duct comprising a top wall of the busbar compartment, and the busbar compartment is configured for at least a part of the at least first portion (B) of the air that entered the first opening to flow over the plurality of horizontal sections of the plurality of busbars within the duct before exiting the third opening.

In an example, the busbar compartment is configured for at least a part of the at least second portion (B) of the air that entered the first opening to flow horizontally over the plurality of horizontal sections of the plurality of busbars before exiting the third opening; and/or the busbar compartment is configured for at least a part of the at least second portion (B) of the air that entered the first opening to flow vertically over the plurality of horizontal sections of the plurality of busbars before exiting the third opening.

Thus looking at Figs. 3-4, in a very detailed embodiment, cold air enters the busbar compartment 10 through opening 30. The cold air convects upwards. Three busbars have horizontal sections 20 inside the busbar compartment. Heat sinks 90 are located at the top of each busbar. A heat sink 100 is also attached to the top of the busbar compartment, and a duct 110 is formed near the top where the top of the duct is the top of the busbar compartment where the heat sink 100 is located. As shown in Figs. 3-4 a portion of the cold air after flowing upwards encounters a guide vane 90 that aids in directing the air into the duct 110 and this air then exits the busbar compartment via opening 70 in the top of the busbar compartment and in doing so extracts heat from the heat sink and from the duct walls and indeed is warmed up on its complete journey and so cools the busbar compartment. Some of this air that initially flowed upwards, but which is not shown as such in Figs. 3-4, is diverted horizontally at the position of the busbars and flow horizontally around the busbars and the heat sinks before exiting the opening 70. At the same time another portion of the cold air is directed below the busbars and exits the busbar compartment via the opening 70 having passed vertically upwards past each of the busbars, and some of this air that passed below the busbars exits the busbar compartment at opening 80. The air that flows below the busbars can actually flow around the busbars towards the lower ends of the busbars.

Thus, in the new busbars design, air drawn into the busbar compartment via natural convention is forced to interact with hot structures of the busbar compartment, and indeed with the busbars themselves, to extract heat from the busbar compartment and lead to overall cooling of the busbar compartment.

### Reference Numerals

- 10: Busbar compartment
- 20: Plurality of busbars
- 30: Opening in outer wall of the busbar compartment
- 40: Opening between internal section of the busbar compartment
- 50: Opening in outer wall of the busbar compartment
- 50: Opening in outer wall of the busbar compartment
- 60: Guide vane
- 70: Opening in outer wall of the busbar compartment
- 80: Opening in outer wall of the busbar compartment
- 90: Busbar heat sink
- 100: Busbar compartment heat sink
- 110: Duct at top of busbar compartment

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A busbar compartment (10) for a low voltage, medium voltage or high voltage switchgear, the busbar compartment comprising:
- a first opening (30) in a first wall of the busbar compartment; and
- a second opening (70) in a second wall of the busbar compartment;
wherein a plurality of busbars (20) each have a horizontal section located within the busbar compartment;
wherein the plurality of horizontal sections of the plurality of busbars are located adjacent to one another;
wherein the first opening is located at a vertical position below the plurality of horizontal sections of the plurality of busbars;
wherein the first opening is located at a lateral position to a first side of the plurality of horizontal sections of the plurality of busbars;
wherein the second opening is located at a vertical position above the plurality of horizontal sections of the plurality of busbars;
wherein the second opening is located at a lateral position to a second side of the plurality of horizontal sections of the plurality of busbars, and wherein the second side is opposite to the first side; and
wherein the busbar compartment is configured for air (A) to enter the first opening and at least a first portion (B) of the air that entered the first opening to exit the second opening.

2. Busbar compartment according to claim 1, wherein the first wall is a side wall of the busbar compartment.

3. Busbar compartment according to any of claims 1-2, wherein the second wall is a top wall of the busbar compartment.

4. Busbar compartment according to any of claims 1-3, wherein the busbar compartment is configured for at least a part of the at least first portion (B) of the air that entered the first opening to flow over the plurality of horizontal sections of the plurality of busbars before exiting the second opening.

5. Busbar compartment according to any of claims 1-4, wherein each of the plurality of horizontal sections of the plurality of busbars has a heat sink (90) thermally connected to it, and wherein the busbar compartment is configured for at least a part of the at least the first portion (B) of the air that entered the first opening to interact with the plurality of heat sinks of the plurality of horizontal sections of the plurality of busbars before exiting the second opening; or wherein a heat sink (100) is thermally connected to a top wall of the busbar compartment, wherein the busbar compartment comprises a duct (110) at the top of the busbar compartment, the duct comprising a top wall of the busbar compartment, and wherein the busbar compartment is configured for at least a part of the at least first portion (B) of the air that entered the first opening to flow over the plurality of horizontal sections of the plurality of busbars within the duct before exiting the second opening.

6. Busbar compartment according to any of claims 4-5, wherein the busbar compartment is configured for at least a part of the at least first portion (B) of the air that entered the first opening to flow horizontally over the plurality of horizontal sections of the plurality of busbars before exiting the second opening; and/or wherein the busbar compartment is configured for at least a part of the at least first portion (B) of the air that entered the first opening to flow horizontally around a region at the top of the plurality of horizontal sections of the plurality of busbars before exiting the second opening; and/or wherein the busbar compartment is configured for at least a part of the at least first portion (B) of the air that entered the first opening to flow vertically over the plurality of horizontal sections of the plurality of busbars before exiting the second opening.

7. Busbar compartment according to any of claims 1-6, wherein the busbar compartment is configured for the air (A) to enter the first opening and for the at least first portion (B) of the air that entered the first opening to flow vertically and then flow horizontally before exiting the second opening.

8. Busbar compartment according to any of claims 1-7, the busbar compartment comprising an air guide vane (60), wherein the air guide vane is located at a lateral position to the first side of the plurality of horizontal sections of the plurality of busbars and located above the plurality of horizontal sections of the plurality of busbars, and wherein the air guide vane is configured to change a flow direction of air by 90 degrees.

9. Busbar compartment according to any of claims 1-8, the busbar compartment comprising a third opening (80) in a third wall of the busbar compartment, wherein the third opening is located at a vertical position below the plurality of horizontal sections of the plurality of busbars; wherein the vertical position of the third opening is above the vertical position of the first opening; wherein the third opening is located at a lateral position to the second side of the plurality of horizontal sections of the plurality of busbars; and wherein the busbar compartment is configured for the air (A) to enter the first opening and at least a second portion (C) of the air that entered the first opening to exit the third opening.

10. Busbar compartment according to claim 9, wherein the third wall is a side wall of the busbar compartment.

11. Busbar compartment according to claim 10, wherein the third wall is opposite to the first wall.

12. Busbar compartment according to any of claims 9-11, wherein the busbar compartment is configured for at least a part of the at least second portion (C) of the air that entered the first opening to flow below and/or at a region at the bottom of the plurality of horizontal sections of the plurality of busbars before exiting the third opening.

13. Busbar compartment according to any of claims 9-12, wherein the busbar compartment is configured for the air (A) to enter the first opening and for the at least second portion (C) of the air that entered the first opening to flow vertically and then flow horizontally before exiting the third opening.

14. A busbar compartment (10) for a low voltage, medium voltage or high voltage switchgear, the busbar compartment comprising:
- a first opening (30) in a first wall of the busbar compartment; and
- a second opening (80) in a second wall of the busbar compartment;
wherein a plurality of busbars (20) each have a horizontal section located within the busbar compartment;
wherein the plurality of horizontal sections of the plurality of busbars are located adjacent to one another;
wherein the first opening is located at a vertical position below the plurality of horizontal sections of the plurality of busbars;
wherein the first opening is located at a lateral position to a first side of the plurality of horizontal sections of the plurality of busbars;
wherein the second opening is located at a vertical position below the plurality of horizontal sections of the plurality of busbars;
wherein the second opening is located at a lateral position to a second side of the plurality of horizontal sections of the plurality of busbars, and wherein the second side is opposite to the first side; and
wherein the busbar compartment is configured for air (A) to enter the first opening and at least a first portion (C) of the air that entered the first opening to exit the second opening.

15. Busbar compartment according to claim 14, wherein the busbar compartment is configured for at least a part of the at least first portion (C) of the air that entered the first opening to flow below and/or at a region at the bottom of the plurality of horizontal sections of the plurality of busbars before exiting the second opening.
